# EUROPEAN PATENT SPECIFICATION

(11) **EP 0 866 754 B1**
(45) Date of publication and mention of the grant of the patent: **12.09.2001**
(21) Application number: 96944154.2
(22) Date of filing: 13.12.1996
(51) Int. Cl.: B60R 3/02

(54) **STEP**
TRITTBRETT
MARCHEPIED

(30) Priority: 29.12.1995 SE 9504689
(43) Date of publication of application: 30.09.1998
(73) Proprietor: AB VOLVO, 405 08 Göteborg (SE)
(72) Inventor: GOLLUNGBERG, Peter, S-440 60 Skärhamn (SE)
(74) Representative: Andersson, Per Rune
(86) International application number: SE9601654
(87) International publication number: WO9724239

(56) References cited:
- DE-B- 2 409 486
- US-A- 4 054 298
- US-A- 4 564 205
- PATENT ABSTRACTS OF JAPAN, Vol. 7, No. 124, M-218; & JP,A,58 039 542 (NISSAN JIDOSHA K.K.), 8 March 1983.

## Description

### TECHNICAL FIELD:

The present invention relates to a step according to the preamble of claim 1. In particular, the main application of the invention is as a step which is arranged in connection with the driving compartment of a heavy vehicle, for use in, for example, construction work.

### TECHNICAL BACKGROUND:

Certain kinds of heavy motor vehicles, such as for example trucks and cross-country vehicles for use in construction work, have a driving compartment which is placed relatively high. In order to make it easier to climb up to the driving compartment, there is normally one or several steps arranged in connection to the driving compartment. The vehicle can also be equipped with an extra step below the regular steps. The extra step further facilitates for the driver or passenger of the vehicle to climb into the driving compartment in an easy manner.

A problem which occurs in those cases where such extra steps are used in for example cross-country vehicles for use in construction work, is that the extra step is arranged so low that, when driving, it risks hitting objects lying on the ground. This is particularly the case when driving off-road, where there is a high risk of large objects being in the way of the step. In this way the step can be damaged if an object is struck.

The above mentioned problem can be solved by suspending the extra step by wires. In this manner, it will move when, for example, it is hit by an object on the ground. Although this previously known step functions satisfactorily in many situations, it has certain drawbacks. It is perceived as unstable when standing on it, which is uncomfortable and which also makes it difficult to enter the driving compartment. It also demands a great deal of space since its "turning radius" backwards, i.e. towards a wheel behind it, is defined by the length of the wires from their attachment points. This means that the step requires a large amount of space relative to the wheel. Finally, there is a risk that the previously known step is not returned to its initial position after being subjected to a force, which might cause problems for the user when exiting from the driving compartment and stepping down on the step.

The patent document DE-A-2 409 486 discloses a step according to the preamble of claim 1 which is designed as a parallelogram with a horizontally arranged step plate and two side elements. If the step comes into contact with an obstacle it will be displaced in the longitudinal direction of the vehicle to which it is attached.

### SUMMARY OF THE INVENTION:

A main purpose of the present invention is thus to solve the above mentioned problems, and to obtain an improved step for a motor vehicle, which step is perceived as being stable by a user, demands only a small amount of space and which furthermore is automatically moved back to a predefined position after being subjected to a force.

This is achieved by an arrangement of the kind mentioned initially, the characteristics of which will become apparent from claim 1.

The invention uses an attachment element, and a first and a second side element, which preferably are plates. The side elements are pivotally attached to, and suspended from, the attachment element via a first upper pivot axis and a second upper pivot axis, which are arranged essentially parallel to each other. The upper pivot axes are preferably hinge constructions. The invention further comprises a step element which is attached to the lower part of the two side elements via a first lower pivot axis and a second lower pivot axis which are arranged essentially parallel to each other. The lower pivot axes are also preferably hinge constructions. The step also comprises at least one spring element, and at least one spring attachment connected to it, which is pivotally arranged, wherein the spring element causes the spring attachment to, when swinging a first direction, exert a force against a side element. Thus, a step similar to a parallelogram is obtained, where the step element is constantly parallel to the attachment element, and is brought back to the initial position by means of the spring element and the spring attachment, after being subjected to a force. The step is further perceived as being stable by the user.

In a preferred embodiment, the invention comprises two spring attachments, both of which are pivotally attached and equipped with stop elements to limit the swinging motion of the spring attachments to predetermined angle positions which correspond to a normal position of the step. The spring element is further arranged between the two spring attachments, and cause these to swing in opposite directions, so that they can exert force against their respective side elements.

In another embodiment, the step element is bent somewhat upwards and/or the attachment element is bent slightly downwards at their respective end parts. This causes a short length of stroke sideways for the step element, which in turn leads to a very limited need of space for the step.

### DESCRIPTION OF THE FIGURES:

The invention will be described in greater detail below, with reference to the appended drawings, in which
- Fig. 1: is a perspective view from a forward angle of a step according to the present invention,
- Fig. 2: is a perspective view from a forward angle, which shows the step of Fig. 1 being subjected to a force from the right.
- Fig. 3: is a perspective rear view of the step according to the invention,
- Fig. 4: is a perspective rear view which shows the step of Fig. 3 being subjected to a force from the right,
- Fig. 5: is a simplified schematic side view which shows the step arranged on a vehicle,
- Fig. 6: is a simplified schematic side view in which the step has been displaced sideways, and
- Figs. 7a and 7b: show a comparison of the function of a step according to the invention, and a conventional step.

### PREFERRED EMBODIMENT:

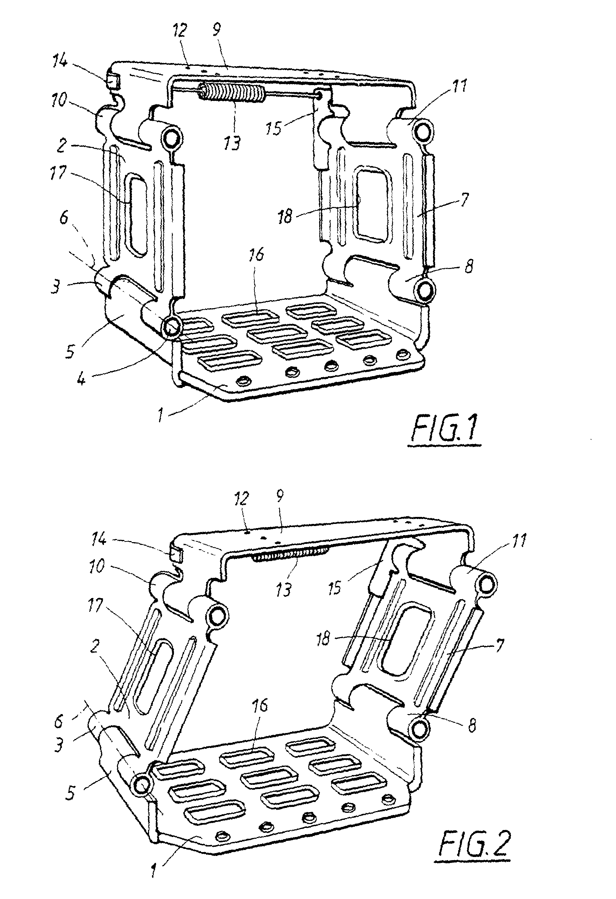

Fig. 1 shows a diagonal front perspective view of a step according to the present invention. The step is primarily intended to be arranged below a driving compartment of a heavy motor vehicle. In a preferred embodiment, the step comprises a step plate 1, which is pivotally attached to a first side plate 2 via a first lower hinge 3, which is of a conventional kind, and comprises an axis 4 which extends through a lower portion of the first side plate 2, and a portion 5 of the step plate 1 which is bent upwards. In this way, the first lower hinge 3 forms a pivot axis 6, which permits the step plate 1 to pivot in relation to the first side plate 2.

In a corresponding manner, the invention comprises a second side plate 7 which is connected to the step plate by means of a second lower hinge 8 which has the same construction and function as the first lower hinge 3.

The two side plates 2 and 7 are connected to an upper attachment plate 9 via a first upper hinge 10 and a second upper hinge 11. The upper hinges 10, 11 preferably have the same construction and function as the lower hinges 3, 8. The attachment plate 9 is preferably bent downwards at its two sides, which will be discussed in detail below. The attachment plate 9 preferably comprises a plurality of screw holes 12 for attachment to a motor vehicle, preferably below its driving compartment.

The attachment plate 9 is thus fixedly arranged to the vehicle, and the step plate 1 is pivotally attached to the two sideplates 2,7 which in turn are pivotally attached to the attachment plate 9. In this way, the step according to the invention forms a parallelogram which permits the step plate 1 to be displaced sideways in both directions, while constantly maintaining an essentially horizontal extension.

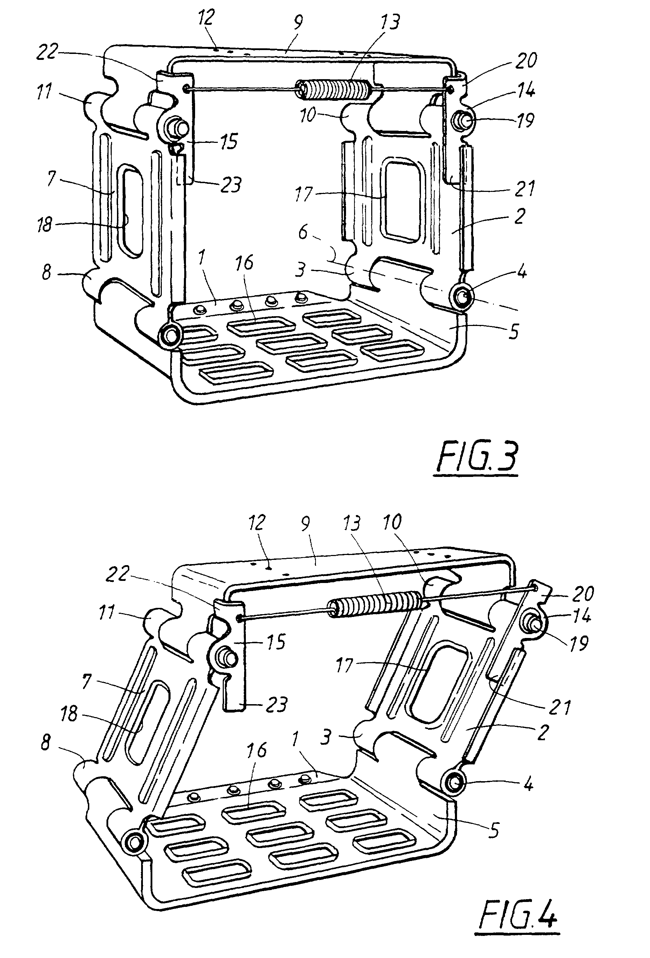

Fig. 1 also shows a spring arrangement comprising a spring 13 which is attached to a first spring attachment 14 and a second spring attachment 15. The function of this spring arrangement will be described in more detail below in connection with Figs. 3 and 4.

As can been seen in Fig. 1, in order to save weight, the step plate 1 and the side plates 2,7 are provided with apertures 16, 17 and 18.

Fig. 2 shows the step according to the invention in a position where it is subjected to a force from the right. This condition can occur if the vehicle to which the step is attached is driven in such a manner that an object on the ground hits the second side plate 7 or the step plate 1. This will cause the side plates 2,7 to pivot around the upper hinges 10 and 11. The step plate 1 is also pivoted relative to the two sides plates 2,7 by means of the lower hinges 3 and 8. In this way, the step plate 1 is displaced sideways (to the left in Fig. 2) relative to the attachment plate 9.

The invention has a geometrical construction in which a parallelogram is formed by the step plate 1, which via the lower hinges 3,8, is pivotally attached to the sideplates 2,7, which in turn are pivotally attached to the attachment plate 9 via the upper hinges 10,11. This causes the step plate 1 to constantly be oriented essentially horizontally and parallel to the attachment plate 9, even when subjected to a sideforce.

Fig. 3 shows the step according to the invention, viewed at an angle from behind. The first spring attachment 14 is pivotally arranged about an axis (not shown in Fig. 3) which is part of the upper second hinge 10, and is held in place by means of a screw 19 or the like, which is arranged on the end part of said axis. Furthermore, the first spring attachment 14 is essentially plate shaped, with an upper part 20 in the shape of an angled section which extends around the right gable of the attachment plate 9.
Furthermore, the first spring attachment 20 has a lower section 21 which partially extends in front of the first side plate 2.

The second spring attachment 15 has the same function and construction as the first spring attachment 14, except that it is inverted. It is pivotally suspended from the second upper hinge 11, and comprises an upper part 22 with an angled section which extends around the left gable of the attachment plate 9. Furthermore, the second spring attachment 15 has a lower section 23 which extends downwards, in front of the second side plate 7.

The spring 13 is attached to the respective upper parts 20,22 of the two spring attachments 14, 15, and functions so as to pivot these towards each other about the axes which are defined by the upper hinges 10,11. This will cause the respective upper parts 20,22 to be in contact with one side edge each of the attachment plate 9. The upper parts 20,22 in this way constitute blocking elements, which through contact with the attachment plate 9 prevent the respective spring attachments 14,15 from pivoting more than a certain distance counter-clockwise respectively clockwise.

The function of the invention will become apparent from Fig. 4, which shows the step when influenced by a force from the right. The side plates 2,7 are pivoted a distance relative to the attachment plate 9. The step plate 1 is also displaced sideways relative to the attachment plate 9, as has been described above.

When the side plates 2,7 are displaced sideways, the first side plate 2 will come into contact with the lower section 21 of the first spring attachment 14. At the opposite side of the attachment plate 9 (i.e. the left side in Fig. 4) the angled section 22 of the second spring attachment 15 is in contact with the attachment plate 9. In this position the spring 13 exerts a force on the two spring attachments 14,15 so that the first spring attachment 14 is made to rotate counter-clockwise about the axis which is defined by the first upper hinge 10, while the second spring attachment 15 is made to rotate clockwise about the axis which is defined by the second upper hinge 11. This causes the first spring attachment 14 to exert a force against the first side plate 2, and the other spring attachment 15 exerts a force against the attachment plate 9.

When the force which has influenced the step to assume the position shown in Fig. 4 ceases, those forces which are exerted against the first side plate 2 and the attachment plate 9 will cause the the first side plate 2 and the second side plate 7, and thereby also the step plate 1, to returne to its normal position, i.e. the position shown in Fig. 3 (and Fig. 1).

The embodiment described comprises a spring arrangement with the spring 13 and the spring attachments 14,15. The spring arrangement is advantageous, since the step is more easily brought back to its initial position after being influenced by a force sideways.

Fig. 5 shows a simplified schematic view of the step according to the invention, attached to a vehicle 24, the front part of which is shown with broken lines. The attachment plate 9 is fixedly attached to the vehicle 24. The sideplates 2,7 are suspended from the attachment plate 9 and can pivot by means of the upper hinges 10,11. Furthermore, the step plate 1 is pivotally attached to the sideplates 2, 7 via the lower hinges 3, 8. The step is arranged at a certain predetermined distance from a wheel 25 of the vehicle, and from the ground 26. The above described spring arrangement is not shown in Fig. 5. However, this arrangement can be added to the step in those cases where an improved function is desired.

Fig. 6 further shows the step in the position where it is subjected to a sideforce, in this case a rock 27 on the ground 26. The step plate 1 will then be displaced sideways, as has been described above, to a position immediately adjacent to the wheel 25. An important principle of the invention is that the step needs a very small space adjacent to the wheel 25, i.e. the step plate 1 is not displaced too far to the right and hits the wheel 25 (or that it becomes necessary to arrange the wheel 25 and the step farther apart). This is achieved by equipping the step plate 1 with end parts 28 and 29 which are bent upwards, and/or by providing the attachment plate 9 with end parts 30, 31, which are bent downwards. In this way, the sideplates 2,7 can be made relatively short, which in turn minimizes the space necessary when displacing the step sideways. Furthermore, the upwards and downwards bent parts 28, 29,30, 31 of the step according to the invention contribute to a step which is perceived as stable when standing on the step plate 1.

According to a preferred embodiment, the upper hinges 10,11 are arranged at a certain distance from the horizontal plane defined by the attachment plate 9. This distance is 5-40%, preferably 15-30%, and, for an optimal function, 22% of the distance between the two horizontal planes formed by the attachment plate 9 and the step plate 1. Furthermore, the lower hinges 3,8 are preferably also arranged at a certain distance from the horizontal plane defined by the step plate 1. This distance is 5-40%, preferably 15-30%, and optimally 22%, of the distance between the two horizontal planes formed by the attachment plane 9 and the step plate 1.

Figs 7a and 7b show a comparison between a step according to the invention, and a conventional step which does not have the above mentioned upwardly and downwardly bent parts 28,29,30 and 31. Fig. 7a shows the step according to the invention, with its normal position indicated with broken lines. A force from the left which causes the step plate 1 to be raised a certain distance x from the initial position will cause the step plate 1 to be displaced a certain distance y₁ sideways. From Fig. 7b it will become apparent that, for a conventional step with the same outer dimensions as the step in Fig. 7a, there will be a sideways displacement y₂ for the step plate 1', which clearly exceeds the sideways displacement y₁ of the step according to the invention.

The invention is not limited to the described embodiment, but can be varied within the scope of the claims. For example, the sideplates and step plates do not necessarily need to be plate shaped, other kinds of elements are also possible.

Furthermore, the step can be used in applications other than vehicles. Also, either the attachment plate 9 or the step plate 1, or both, can be equipped with downwardly and upwardly bent side edges 28,29,30 and 31.

The pivot joint 3, 8, 10, 11 can be defined by conventional hinges, or other elements which permit a pivotal attachment.

## Claims

1. Step comprising an attachment element (9), a first side element (2) and a second side element (7), pivotally attached to, and suspended from, the attachment element (9) via a first upper pivot axis (10) and a second upper pivot axis (11), respectively, which are arranged essentially parallel to each other, a step element (1) attached to the lower part of the respective side element (2, 7) via a first lower pivot axis (3) and a second lower pivot axis (8), respectively, which are arranged essentially parallel to each other, **characterized in that** it comprises a spring element (13) and at least one spring attachment (14, 15) connected thereto, said spring attachment being pivotally arranged about at least one of said upper pivot axes (10; 11), with the spring element (13), when pivoting in a first direction, causing the spring attachment (14, 15) to exert a force against a side element (2, 7), the spring attachment (14, 15) is pivotally arranged in relation to said side element (2; 7) and attachment element (9), and comprises a lower section (21; 23) which is acted upon by the spring element (13) in a direction towards the side element (2; 7) and an upper section (20; 22) which, via the spring element (13), is urged to contact the attachment element (9), the pivoting of the spring attachment (14; 15) being limited, when the spring attachment (14, 15) is in contact with the attachment element (9), to a predetermined angular position which corresponds to said side element (2; 7) being suspended essentially vertically from the attachment element (9).

2. Step according to claim 1, **characterized in that** it comprises two spring attachments (14, 15) which are pivotally arranged in the first upper pivot axis (10) and the second upper pivot axis (11), respectively, and that the spring element (13) is arranged between the respective upper section (20, 22) of said spring attachments (14, 15) and is adapted to influence the respective spring attachment (14, 15) to pivot in opposite directions so as to exert a force upon the respective side element (2, 7).

3. Step according to claim 2, **characterized in that** the respective lower section (21, 23) of said spring attachments (14, 15) are arranged in a manner in relation to the respective side element (2, 7) so that the spring element (13) is tightened when the respective side element (2, 7) is pivoted in a direction towards the respective lower section (21, 23).

4. Step according to any one of the previous claims, **characterized in that** said attachment element (9) comprises end parts (30, 31) which are bent downwards, and in that said upper hinges (10, 11) are arranged at said end parts (30, 31) but not in the horizontal plane which is defined by the attachment element (9).

5. Step according to any one of the previous claims, **characterized in that** said upper hinges (10, 11) are arranged at a distance from the horizontal plane which is defined by the attachment element (9), which distance is 5-40% of the distance between the horizontal planes formed by the attachment element (9) and the step element (1).

6. Step according to any one of the previous claims, **characterized in that** said step element (1) comprises end parts (28, 29) which are bent upwards, and in that said lower hinges (3, 8) are arranged at said end parts (28, 29) but separate from the horizontal plane defined by the step element (1).

7. Step according to claim 6, **characterized in that** said lower hinges (3, 8) are arranged at a distance from the horizontal plane defined by the step element (1) which is 5-40% of the distance between the horizontal planes formed by the attachment element (9) and the step element (1).

8. Vehicle comprising a step according to any of claims 1-7.

## Patentansprüche

1. Trittbrett mit einem Befestigungselement (9), einem ersten Seitenelement (2) und einem zweiten Seitenelement (7), die jeweils über eine erste obere Schwenkachse (10) und eine zweite obere Schwenkachse (11), die im wesentlichen parallel zueinander angeordnet sind, schwenkbar an dem Befestigungselement (9) befestigt sind und von diesem herabhängen, einem Trittelement (1), welches jeweils an dem unteren Abschnitt des jeweiligen Seitenelementes (2, 7) über eine erste untere Schwenkachse (3) und eine zweite untere Schwenkachse (8), die im wesentlichen parallel zueinander angeordnet sind, befestigt ist,
**dadurch gekennzeichnet, dass**
das Trittbrett ein Federelement (13) und wenigstens eine an ihm befestigte Federbefestigungseinrichtung (14, 15) aufweist, wobei die Federbefestigungseinrichtung um wenigstens eine der oberen Drehachsen (10; 11) schwenkbar angeordnet ist, wobei das Federelement (13) bei einer Schwenkbewegung in einer ersten Richtung die Federbefestigungseinrichtung (14, 15) dazu veranlasst, eine Kraft gegen ein Seitenelement (2, 7) auszuüben, wobei die Federbefestigungseinrichtung (14, 15) bezüglich des Seitenelementes (2; 7) und des Befestigungselementes (9) schwenkbar angeordnet ist und einen unteren Abschnitt (21; 23), auf den das Federelement (13) in einer Richtung gegen das Seitenelement (2; 7) eingewirkt, und einen oberen Abschnitt (20; 22) aufweist, der über das Federelement (13) in Kontakt mit dem Befestigungselement (9) gedrückt ist, wobei die Schwenkbewegung der Federbefestigungseinrichtung (14; 15) beim Kontakt der Federbefestigungseinrichtung (14; 15) mit dem Befestigungselement (9) auf eine vorbestimmte Winkelstellung beschränkt ist, die mit dem Seitenelement (2; 7) korrespondiert, das im wesentlichen senkrecht von dem Befestigungselement (9) abgehängt ist.

2. Trittbrett nach Anspruch 1, **dadurch gekennzeichnet, dass** zwei Federbefestigungseinrichtungen (14, 15) vorgesehen sind, die jeweils um die erste obere Drehachse (10) und die zweite obere Drehachse (11) schwenkbar angeordnet sind, und dass das Federelement (13) zwischen dem jeweiligen oberen Abschnitt (20, 22) der Federbefestigungseinrichtungen (14, 15) angeordnet und für ein Einwirken auf die jeweilige Federbefestigungseinrichtung (14, 15) zum Verschwenken in entgegengesetzte Richtungen zum Ausüben einer Kraft gegen das entsprechende Seitenelement (2, 7) vorgesehen ist.

3. Trittbrett nach Anspruch 1, **dadurch gekennzeichnet, dass** der jeweilige untere Abschnitt (21, 23) der Federbefestigungseinrichtungen (14, 15) bezüglich des jeweiligen Seitenelementes (2, 7) derart angeordnet ist, dass das Federelement (13) bei einem Schwenken des jeweiligen Seitenelementes (2, 7) in Richtung gegen den jeweiligen unteren Abschnitt (21, 23) gespannt wird.

4. Trittbrett nach einem der vorhergehenden Ansprüche, **dadurch gekennzeichnet, dass** das Befestigungselement (9) Endabschnitte (30, 31) aufweist, die heruntergebogen sind, und dass die oberen Schwenkgelenke (10, 11) an den Endabschnitten (30, 31) angeordnet sind, jedoch nicht in der horizontalen Ebene, die durch das Befestigungselement (9) definiert ist.

5. Trittbrett nach einem der vorhergehenden Ansprüche, **dadurch gekennzeichnet, dass** die oberen Schwenkgelenke (10, 11) in einem Abstand von der durch das Befestigungselement (9) definierten Ebene angeordnet sind, wobei der Abstand 5 - 40% des Abstandes zwischen den horizontalen Ebenen beträgt, die durch das Befestigungselement (9) und das Trittelement (1) gebildet sind.

6. Trittbrett nach einem der vorhergehenden Ansprüche, **dadurch gekennzeichnet, dass** das Trittelement (1) Endabschnitte (28, 29) aufweist, die nach oben gebogen sind, und dass die unteren Schwenkgelenke (3, 8) an den Endabschnitten (28, 29) angeordnet sind, jedoch getrennt von der durch das Trittelement (1) definierten horizontalen Ebene.

7. Trittbrett nach Anspruch 6, **dadurch gekennzeichnet, dass** die unteren Schwenkgelenke (3, 8) in einem Abstand von der durch das Trittelement (1) definierten horizontalen Ebene angeordnet sind, wobei der Abstand 5 - 40% des Abstandes zwischen den horizontalen Ebenen beträgt, die durch das Befestigungselement (9) und das Trittelement (1) gebildet sind.

8. Kraftfahrzeug mit einem Trittbrett, das nach einem der Ansprüche 1 bis 7 ausgebildet ist.

## Revendications

1. Marchepied comprenant un élément d'attache (9), un premier élément latéral (2) et un deuxième élément latéral (7) attachés de façon pivotante et suspendus depuis l'élément d'attache (9) via un premier axe de pivotement supérieur (10) et via un deuxième axe de pivotement supérieur (11) respectivement, qui sont agencés essentiellement parallèles l'un à l'autre, un élément formant marche (1) attaché à la partie inférieure de l'élément latéral respectif (2, 7) via un premier axe de pivotement inférieur (3) et via un deuxième axe de pivotement inférieur (8) respectivement, qui sont agencés essentiellement parallèlement l'un à l'autre, **caractérisé en ce qu'**il comprend un élément formant ressort (13) et au moins un élément d'attache de ressort (14, 15) connecté à celui-ci, ledit élément d'attache de ressort étant agencé en pivotement autour de l'un au moins desdits axes de pivotement supérieurs (10 ; 11), et en ce que l'élément de ressort (13) amène, lorsqu'il pivote dans une première direction, l'élément d'attache de ressort (14, 15) à exercer une force contre un élément latéral (2, 7), ledit élément d'attache de ressort (14, 15) étant agencé en pivotement en relation par rapport audit élément latéral (2 ; 7) et audit élément d'attache (9), et comprenant un tronçon inférieur (21 ; 23) sur lequel agit l'élément de ressort (13) dans une direction vers l'élément latéral (2 ; 7) et un tronçon supérieur (20 ; 22) qui est repoussé, par l'élément de ressort (13), en contact avec l'élément d'attache (9), le pivotement de l'élément d'attache de ressort (14 ; 15) étant limité, lorsque l'élément d'attache de ressort (14, 15) est en contact avec l'élément d'attache (9), à une position angulaire prédéterminée qui correspond à ce que ledit élément latéral (2 ; 7) est suspendu essentiellement verticalement depuis l'élément d'attache (9).

2. Marchepied selon la revendication 1, **caractérisé en ce qu'**il comprend deux éléments d'attache de ressort (14, 15) qui sont agencés en pivotement dans le premier axe de pivotement supérieur (10) et dans le deuxième axe de pivotement supérieur (11) respectivement, et en ce que l'élément de ressort (13) est agencé entre le tronçon supérieur respectif (20, 22) desdits éléments d'attache de ressort (14, 15) et est adapté à influencer l'élément d'attache de ressort respectif (14, 15) afin de pivoter dans des directions opposées de manière à exercer une force sur l'élément latéral respectif (2, 7).

3. Marchepied selon la revendication 2, **caractérisé en ce que** le tronçon inférieur respectif (21, 23) desdits éléments d'attache de ressort (14, 15) est agencé de telle manière par rapport à l'élément latéral respectif (2, 7) que l'élément de ressort (13) est tendu lorsque l'élément latéral respectif (2, 7) est pivoté dans une direction vers le tronçon inférieur respectif (21, 23).

4. Marchepied selon l'une quelconque des revendications précédentes, **caractérisé en ce que** ledit élément d'attache (9) comprend des parties terminales (30, 31) qui sont recourbées vers le bas, et ce que lesdits axes d'articulation supérieurs (10, 11) sont agencés au niveau desdites parties terminales (30, 31) mais non pas dans le plan horizontal qui est défini par l'élément d'attache (9).

5. Marchepied selon l'une quelconque des revendications précédentes, **caractérisé en ce que** lesdits axes d'articulation supérieurs (10, 11) sont agencés à distance depuis le plan horizontal qui est défini par l'élément d'attache (9), cette distance étant de 5 à 40% de la distance entre les plans horizontaux formés par l'élément d'attache (9) et par l'élément formant marche (1).

6. Marchepied selon l'une quelconque des revendications précédentes, **caractérisé en ce que** ledit élément formant marche (1) comprend des parties terminales (28, 29) qui sont recourbées vers le haut, et en ce que lesdits axes d'articulation inférieurs (3, 8) sont agencés au niveau desdites parties terminales (28, 29), mais séparés depuis le plan horizontal défini par l'élément formant marche (1).

7. Marchepied selon la revendication 6, **caractérisé en ce que** lesdits axes d'articulation inférieurs (3, 8) sont agencés à distance depuis le plan horizontal défini par l'élément formant marche (1), qui est de 5 à 40% de la distance entre les plans horizontaux formés par l'élément d'attache (9) et par l'élément formant marche (1).

8. Véhicule comprenant un marchepied en accord avec l'une quelconque des revendications 1 à 7.
